(19) **Europäisches Patentamt** / **European Patent Office** / **Office européen des brevets**

(11) **EP 2 086 104 B1**

(12) # EUROPÄISCHE PATENTSCHRIFT

(45) Veröffentlichungstag und Bekanntmachung des Hinweises auf die Patenterteilung:
**12.08.2015 Patentblatt 2015/33**

(51) Int Cl.:
*H02P 6/00* (2006.01)  *H02P 6/14* (2006.01)

(21) Anmeldenummer: **09000849.1**

(22) Anmeldetag: **22.01.2009**

(54) **Elektronisch kommutierter Motor**

Electronically commuted motor

Moteur électronique commuté

(84) Benannte Vertragsstaaten:
**DE**

(30) Priorität: **29.01.2008 DE 102008008080**

(43) Veröffentlichungstag der Anmeldung:
**05.08.2009 Patentblatt 2009/32**

(73) Patentinhaber: **Ebm-Papst St. Georgen GmbH & CO. KG**
**78112 St. Georgen (DE)**

(72) Erfinder:
• **Haas, Benjamin**
**78112 St. Georgen (DE)**

• **Heller, Frank**
**78126 Königsfeld-Burgberg (DE)**

(74) Vertreter: **Raible, Tobias**
**Raible & Raible**
**Patentanwälte**
**Bolzstrasse 3**
**70173 Stuttgart (DE)**

(56) Entgegenhaltungen:
**EP-A1- 1 786 093       EP-A2- 1 837 986**
**WO-A1-03/015255     DE-U1- 20 022 114**

**Beschreibung**

Die Erfindung betrifft einen elektronisch kommutierten Motor.

Die EP 1 786 093 A1 zeigt einen elektronisch kommutierten Motor, einen Rotor und einen dem Rotor zugeordneten Rotorstellungssensor, welcher Rotorstellungssensor ein Rotorstellungssignal erzeugt, das abhängig von der mechanischen Umdrehung des Rotors ist und Polwechsel des Rotors am Rotorstellungssensor anzeigt. Der Motor hat einen Stator, welcher einen Wicklungsstrang aufweist, welcher Wicklungsstrang in der Diagonalen einer H-Brücke angeordnet ist. Die H-Brücke ist auf einer ersten Seite zur Verbindung mit einem Pol $+U_B$ einer Gleichspannungsquelle ausgebildet und auf einer zweiten Seite zur Verbindung mit einem Pol GND der Gleichspannungsquelle ausgebildet. Die zweite Seite ist über einen Fußpunktwiderstand mit dem Pol GND verbindbar und verbunden, und der Fußpunktwiderstand dient zur Messung des Motorstroms, indem eine dem Motorstrom proportionale Spannung am Fußpunktwiderstand abgegriffen und einem A/D-Wandler einer Steuerung zugeführt wird. Die Steuerung bewirkt, dass die Kommutierungssignale derart erzeugt werden, dass diejenigen von den Halbleiterschaltern, die im Augenblick eingeschaltet sind, ausgeschaltet werden, und dass diejenigen von den Halbleiterschaltern, die ausgeschaltet sind, eingeschaltet werden. Hierdurch wird die Bestromung des Wicklungsstrang in die entgegengesetzte Richtung umgeschaltet.

Man unterscheidet verschiedene Bauarten von elektronisch kommutierten Motoren. Diese können eine unterschiedliche Zahl von n Wicklungssträngen haben, wobei n gewöhnlich im Bereich 1 bis 6 liegt.

In diesen Wicklungssträngen fließen im Betrieb Stromimpulse, die entweder nur eine Richtung kennen, oder aber Stromimpulse, deren Richtung im Verlauf einer Rotordrehung von etwa 360° el. zweimal durch eine so genannte Kommutierung umgeschaltet wird.

Da in einem solchen Motor erhebliche Ströme fließen können, versucht man, die Kommutierung in Form eines Kommutierungsvorgangs über eine gewisse Zeitspanne so zu erstrecken, dass während dieser Zeitspanne der Motor mit einem guten Wirkungsgrad, also verlustfrei, arbeitet. Dies bedeutet, dass es wünschenswert wäre, die vor der Umschaltung des Stromes im betreffenden Wicklungsstrang gespeicherte Energie möglichst komplett zum Antrieb des Motors auszunutzen.

Es ist deshalb eine Aufgabe der Erfindung, einen neuen elektronisch kommutierten Motor bereitzustellen.

Diese Aufgabe wird nach der Erfindung gelöst durch einen Motor nach Anspruch 1. Bei einem solchen Motor ist der zweite Zeitpunkt variabel und wird bei laufendem Motor je nach den äußeren Bedingungen, z.B. der augenblicklichen Betriebsspannung des Motors, der augenblicklichen Last des Motors, etc. automatisch so verändert, dass der Kommutierungsvorgang günstig und in der Nähe seines Optimums verläuft. Z.B. kann man bei einem Lüfter dann, wenn der Luftdruck sich verändert, den Kommutierungsvorgang automatisch an den neuen Luftdruck anpassen.

Dies ist deshalb wichtig, weil ohne den Vorgang des Stromkreisens die im Wicklungsstrang gespeicherte magnetische Energie während des Kommutierungsvorgangs in einem so genannten Zwischenkreiskondensator kurzzeitig gespeichert und direkt anschließend aus diesem Zwischenkreiskondensator wieder dem Motor zugeführt werden müsste. Dies bedeutet, dass zu diesem Kondensator ständig ein Wechselstrom fließt, der die Lebensdauer dieses Kondensators verringert, und es nötig macht, einen großen Kondensator zu verwenden, für den in vielen modernen Motoren wegen deren kompakten Bauweise kein Platz vorhanden ist.

Weitere Einzelheiten und vorteilhafte Weiterbildungen der Erfindung ergeben sich aus den im Folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1 ein stark schematisiertes Schaltbild zur Erläuterung der Erfindung,

Fig. 2 ein Schaltbild analog Fig.1,

Fig. 3 den Ablauf eines Kommutierungsvorgangs, bei welchem dieser durch das Signal eines Rotorstellungssensors mit digitalem Ausgangssignal gesteuert wird,

Fig. 4 den Ablauf eines Kommutierungsvorgangs, bei dem die bei der Kommutierung im abzuschaltenden Wicklungsstrang gespeicherte magnetische Energie dadurch abgebaut wird, dass in diesem Wicklungsstrang durch Stromkreisen ein Kurzschlussstrom erzeugt wird, der zum Antrieb des Rotors 28 beiträgt, hier aber in einer nicht optimierten Weise,

Fig. 5 einen Ablauf analog Fig. 4, wobei aber das Stromkreisen in optimierter Weise erfolgt, um einen Motor mit kleiner Baugröße und gutem Wirkungsgrad zu erhalten,

Fig. 6 zusätzliche Bilder zur Erläuterung des Kommutierungsvorgangs gemäß Fig. 3,

Fig. 7  zusätzliche Bilder zur Erläuterung des Kommutierungsvorgangs gemäß Fig. 4,

Fig. 8  einen Algorithmus zur Optimierung des Kommutierungsvorgangs durch einen adaptiven Regelvorgang, der im Lauf des Motors immer wieder durchgeführt wird, und

Fig. 9  ein Schaltbild analog Fig. 1 zur Erläuterung einer Einzelheit.

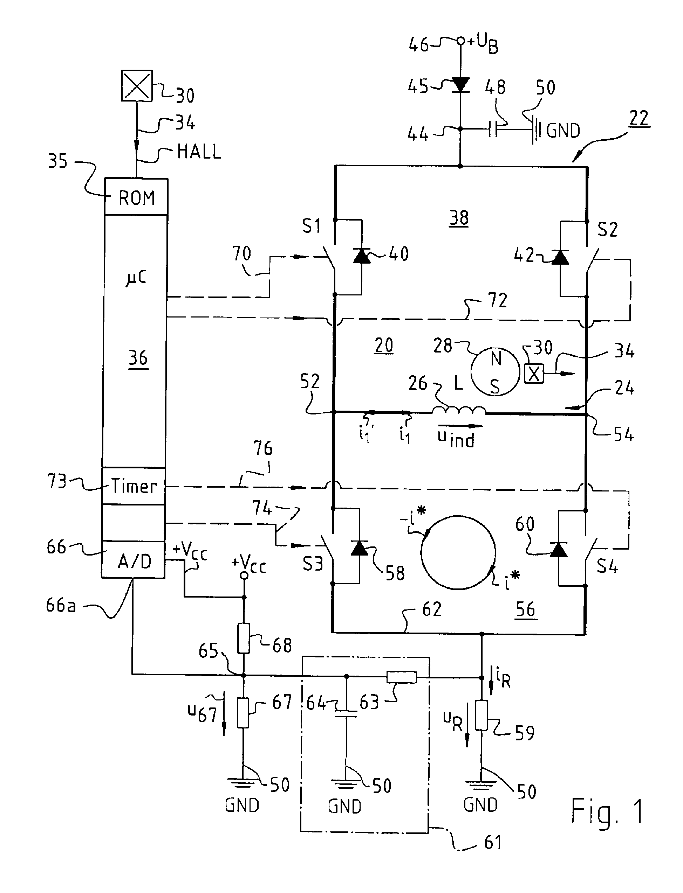

**Fig. 1** zeigt in stark schematisierter Darstellung den grundsätzlichen Aufbau eines zweipulsigen einsträngigen, elektronisch kommutierten Motors 20, dessen einziger Wicklungsstrang 26 an einer H-Brücke 22 betrieben wird, deren H-förmige Grundstruktur durch dickere Linien hervorgehoben ist, um das Verständnis zu erleichtern.

In einem Querzweig 24, den man auch als Diagonale der H-Brücke 22 bezeichnet, hat der Motor 20 in seinem Stator den Wicklungsstrang 26 mit der Induktivität L. Dieser arbeitet zusammen mit einem schematisch dargestellten permanentmagnetischen Rotor 28, der je nach Bauart die verschiedensten Formen haben kann, z.B. Innenrotor, Außenrotor, Flachrotor etc., und der verschiedene Polzahlen haben kann, z.B. zweipolig (wie dargestellt), vier-, sechs-, achtpolig etc.

Ein Rotorstellungssensor 30, der in Fig. 1 doppelt dargestellt ist und gewöhnlich ein Hallsensor ist, wird vom Magnetfeld des Rotors 28 gesteuert. Das Ausgangssignal "HALL" des Sensors 30 wird über eine Leitung 34 einem Mikrocontroller ($\mu$C) 36 zugeführt und liefert diesem Informationen über die augenblickliche Drehstellung des Rotors 28.

Die H-Brücke 22 hat eine obere Brückenhälfte 38, bei der links ein Halbleiterschalter S1 und rechts ein Halbleiterschalter S2 vorgesehen sind. Zu S1 ist eine Freilaufdiode 40 und zu S2 ist eine Freilaufdiode 42 antiparallel geschaltet, deren Katoden über eine Verbindungsleitung 44 und eine Diode 45 an den positiven Pol 46 einer Spannungsquelle $U_B$ angeschlossen sind. Die Verbindungsleitung 44 bildet den positiven Teil eines so genannten Gleichstrom-Zwischenkreises (dc link), dessen negativer Teil von Masse 50 gebildet wird. Zwischen der Katode der Diode 45 und Masse 50 ist ein Kondensator 48 angeschlossen, den man als Zwischenkreis-Kondensator 48 bezeichnet und der dazu dient, in bestimmten Situationen kurzzeitig einen Rückspeisestrom vom Motor 20 aufzunehmen und zu speichern, und gleich anschließend die gespeicherte Energie an den Motor 20 zurückzuliefern, was nachfolgend näher erläutert wird. Dadurch fließt im Betrieb zwischen dem Motor 20 und dem Kondensator 48 ein Wechselstrom, dessen Frequenz von der Drehzahl des Motors 20 abhängig ist und dessen Höhe möglichst klein sein sollte, da dieser Strom zu einer Erwärmung des Kondensators führt und daher dessen Lebensdauer, und dadurch auch die Lebensdauer des Motors, verringert.

Die Anode der Diode 40 ist mit einem Knotenpunkt 52 verbunden, derjenige der Diode 42 mit einem Knotenpunkt 54. Der Wicklungsstrang 26 ist zwischen den Knotenpunkten 52, 54 angeordnet.

Die H-Brücke 22 hat auch eine untere Brückenhälfte 56, bei der links ein Halbleiterschalter S3 und rechts ein Halbleiterschalter S4 vorgesehen ist. Zu S3 ist eine Freilaufdiode 58 und zu S4 eine Freilaufdiode 60 antiparallel geschaltet. Die Katode der Diode 58 ist mit dem Knotenpunkt 52 verbunden, die der Diode 60 mit dem Knotenpunkt 54. Die Anoden der Dioden 58, 60 sind über eine Verbindungsleitung 62 und einen niederohmigen Messwiderstand 59 mit Masse 50 verbunden. An dem Messwiderstand 59 tritt im Betrieb eine Spannung $u_R$ auf, und diese wird, über einen passiven Tiefpass 61, gebildet von einem Widerstand 63 und einem Kondensator 64, dem Eingang 66a eines A/D-Wandlers 66, z. B. im $\mu$C 36, zugeführt, und dort in einen digitalen Wert umgewandelt.

Da der A/D-Wandler 66 nur positive Signale verarbeiten kann, jedoch die Spannung $u_R$ am Messwiderstand 59 im Betrieb auch negativ werden kann, wird diese Spannung $U_R$ elektrisch in positiver Richtung verschoben. Hierzu ist der Ausgang des Tiefpasses 61 mit einem Knotenpunkt 65 verbunden, der über einen Widerstand 67 mit Masse 50 und über einen Widerstand 68 mit einer geregelten Spannung $+V_{cc}$ verbunden ist, an welche auch der $\mu$C 36 angeschlossen ist.

Beispiel

Bei einem Versuchsaufbau wurden für die Bauelemente folgende Werte verwendet:

Motor 20 für Lüfterantrieb

| | |
|---|---|
| Betriebsspannung | 48 V |
| Aufnahmeleistung | 18 W |

| | |
|---|---|
| $V_{CC}$ | +5V |
| Widerstand 59 | 0,62 Ohm |
| Widerstände 63, 67 | 1 kOhm |
| Widerstand 68 | 4 kOhm |
| Kondensator 64 | 1 nF |

Diese Werte sind naturgemäß von der Betriebsspannung und der Leistung des Motors 20 abhängig und dienen nur zur Erläuterung eines Beispiels.

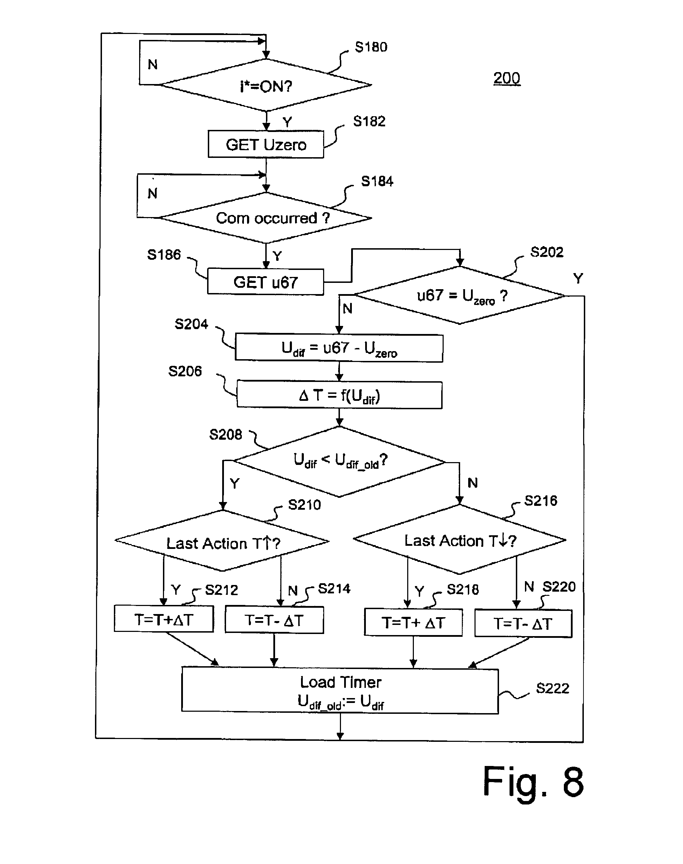

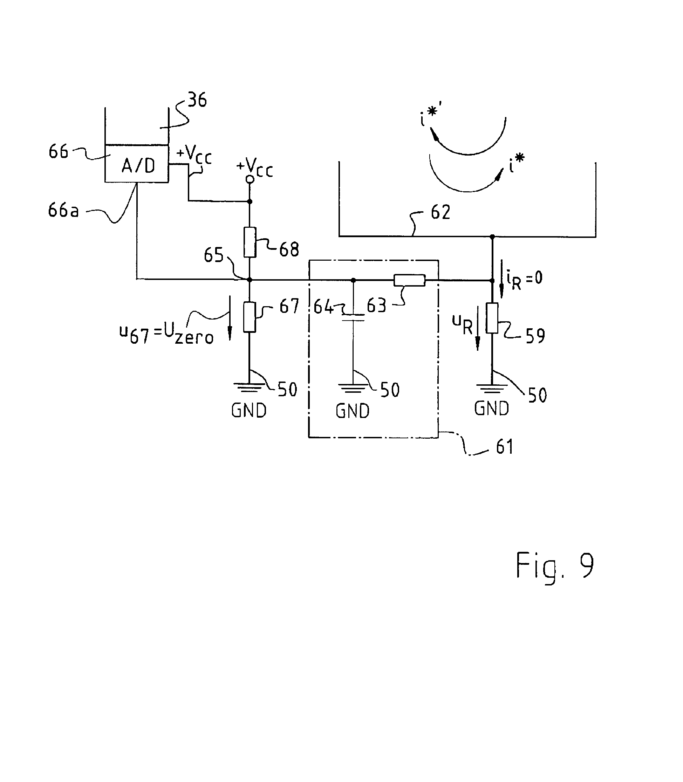

Fig. 9 zeigt einen Auszug aus Fig. 1 zur Erläuterung des Spannungs-Referenzwertes $U_{zero}$, der im Flussdiagramm der Fig. 8 verwendet wird.

Die Messung von $U_{zero}$ erfolgt, wenn ein Kreisstrom i* fließt, was entweder im Uhrzeigersinn oder entgegen dem Uhrzeigersinn der Fall sein kann. In beiden Fällen sind in Fig. 1 die beiden oberen Halbleiterschalter S1 und S2 nichtleitend, und die beiden unteren Halbleiterschalter S3 und S4 sind leitend. Durch diese Umschaltung fließt beim Kommutierungsvorgang ein Kreisstrom i* oder i*' durch den Statorstrang 26 und durch die beiden unteren Halbleiterschalter S3 und S4 bzw. deren Dioden 58 oder 60. Da die beiden oberen Halbleiterschalter S1 und S2 nichtleitend sind, kann über den Widerstand 59 kein Strom $i_R$ zum oder vom Motor 20 fließen, so dass die Spannung $u_{67}$ am Widerstand 67, also die Eingangsspannung des A/D-Wandlers 66, den Wert $U_{zero}$ hat, also den Wert, der dem Strom $i_R = 0$ entspricht. Dieser Wert $U_{zero}$ stellt bei Fig. 9 eine Referenzspannung dar, auf die Änderungen bezogen werden. Bei den oben angegebenen Werten der Bauteile hat $U_{zero}$ ungefähr einen Wert von +1 V. Dies ermöglicht die Digitalisierung von Spannungen $u_R$, die entweder positiv - oder in bestimmten Fällen - negativ sein können und die durch die Anordnung mit den Widerständen 63, 67, 68 in einen positiven Bereich verschoben werden, in dem die Digitalisierung durch den Wandler 66 möglich ist.

Die Halbleiterschalter S1 bis S4 werden über Steuerverbindungen 70, 72, 74, 76 vom µC 36 gesteuert. Hierzu braucht dieser Informationen über die augenblickliche Rotorstellung, die er über das Signal HALL und ggf. auf sonstige Weise erhält, z. B. über Sensoren anderer Art, über die als Sensorless bekannte Messmethode, oder auf sonstige Weise. Dies wird nachfolgend erläutert.

Die Umschaltung erfolgt im Allgemeinen kurz vor der Änderung des Signals HALL, durch eine sog. frühzeitige Kommutierung, die man im Fachjargon meist als Frühzündung oder Frühkommutierung bezeichnet.

### Arbeitsweise:

Im Betrieb werden - je nach der Drehstellung des Rotors 28 - z. B. als erstes die beiden Halbleiterschalter S1 und S4 leitend gemacht, so dass ein Stromimpuls i1 vom Anschluss 46 über die Diode 45, den Halbleiterschalter S1, den Knotenpunkt 52, den Wicklungsstrang 26, den Knotenpunkt 54, den Halbleiterschalter S4 und den Messwiderstand 59 nach Masse 50 fließt.

Auf diesen Stromimpuls i1 folgt ein Kommutierungsvorgang, an dessen Anfang die externe Energiezufuhr zum Motor 20 unterbrochen wird, indem - bei diesem Beispiel - S1 nichtleitend gemacht wird. Dieser Vorgang wird nachfolgend ausführlich beschrieben.

Wenn am Ende des Kommutierungsvorgangs im Wicklungsstrang 26 kein Strom i1 mehr fließt, wird auch S4 nichtleitend gemacht, und die Halbleiterschalter S2 und S3 werden leitend gemacht, so dass jetzt ein Stromimpuls i1' vom Anschluss 46 über die Diode 45 den Halbleiterschalter S2, den Knotenpunkt 54, den Strang 26, den Knotenpunkt 52, den Schalter S3 und den Messwiderstand 59 nach Masse 50 fließt.

Anschließend an die Kommutierung wird also der Halbleiterschalter S4 gesperrt, im Idealfall dann, wenn der Kreisstrom i* gerade den Wert Null erreicht hat, und der Halbleiterschalter S2 wird eingeschaltet, so dass jetzt ein Stromimpuls i1' fließt.

Gleichzeitig hiermit wird durch den A/D-Wandler 66 die analoge Spannung $u_{67}$ als digitaler Wert gemessen, wodurch indirekt die Höhe der Spannung am Messwiderstand 59 erfasst wird.

Wenn der Motor 20 optimal geregelt ist, hat diese Spannung $u_{67}$ bei der Messung direkt nach der Kommutierung ebenfalls den Referenzwert $U_{zero}$, d. h. in diesem Fall arbeitet die Kommutierung ideal und braucht nicht verändert zu werden. Der Motor 20 arbeitet mit einem sehr guten Wirkungsgrad, und der Strom zum Zwischenkreiskondensator 48 wird sehr klein, so dass dieser nicht erwärmt wird, und eine hohe Lebensdauer hat.

Ist jedoch die Kommutierung noch nicht (oder nicht mehr) optimal eingestellt, z. B., weil sich die Spannung $U_B$ verändert hat, so wird bei der Kommutierung die Spannung $u_R$ kurzzeitig negativ, und dementsprechend wird die Spannung $u_{67}$ kleiner als $U_{zero}$, weshalb Korrekturen erfolgen, die nachfolgend anhand des Flussdiagramms der Fig. 8 beschrieben werden. Auf diese Weise wird der Motor 20 fortlaufend optimiert.

Es ergibt sich also folgendes Schema:

S1, S4 leitend; S2, S3 nichtleitend -> der Wicklungsstrang 26 wird in der einen Richtung bestromt.
S3, S4 leitend; S1, S2 nichtleitend -> Strom kreist im unteren Teil 56 der H-Brücke 22.
S2, S3 leitend, S1, S4 nichtleitend -> der Wicklungsstrang 26 wird in der anderen Richtung bestromt.
S3, S4 leitend, S1, S2 nichtleitend -> Strom kreist im unteren Teil 56 der H-Brücke 22.

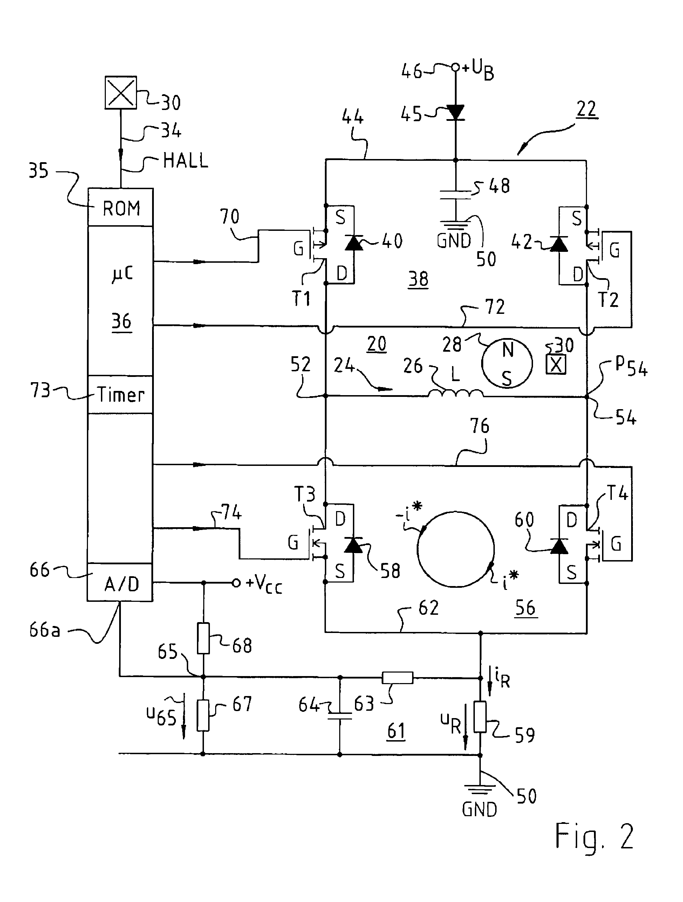

**Fig. 2** zeigt ein Beispiel für die Realisierung der H-Brücke 22 mit MOSFETs. Gleiche oder gleich wirkende Teile wie in Fig. 1 haben dieselben Bezugszeichen wie dort und werden gewöhnlich nicht nochmals beschrieben.

Statt des Halbleiterschalters S1 der Fig. 1 ist hier ein p-Kanal MOSFET T1 vorgesehen, dessen Source S mit dem positiven Anschluss 44 des Zwischenkreises verbunden ist und dessen Gate G über die Leitung 70 vom μC 36 gesteuert wird. Antiparallel zum MOSFET T1 liegt die Freilaufdiode 40. In vielen Fällen ist eine solche Freilaufdiode bereits im MOSFET vorhanden, als so genannte "parasitäre" Freilaufdiode. Falls nicht, kann sie als separates Bauelement ausgeführt werden.

Ebenso ist statt des Halbleiterschalters S2 der Fig. 1 ein p-Kanal MOSFET T2 vorhanden, zu dem die Freilaufdiode 42 antiparallel geschaltet ist. Der Transistor T2 wird über die Leitung 72 vom μC 36 gesteuert.

Statt des Halbleiterschalters S3 der Fig. 1 ist in Fig. 2 ein n-Kanal MOSFET T3 vorgesehen, zu dem die Freilaufdiode 58 antiparallel geschaltet ist. Seine Source S ist mit der Leitung 62 verbunden, und sein Drain D ist, ebenso wie derjenige des Transistors T1, mit dem Knotenpunkt 52 verbunden. T3 wird über eine Leitung 74 vom μC 36 gesteuert.

Ebenso ist statt des Halbleiterschalters S4 der Fig. 1 ein n-Kanal MOSFET T4 vorgesehen, zu dem die Freilaufdiode 60 antiparallel geschaltet ist. Sein Drain D ist ebenso wie der Drain D des Halbleiterschalters T2 mit dem Knotenpunkt 54 verbunden. Der MOSFET T4 wird über die Steuerleitung 76 vom μC 36 gesteuert.

Wie ein Vergleich der Fig. 1 und 2 zeigt, sind der Strommesswiderstand 59 und die an ihn angeschlossenen Teile gleich ausgebildet wie bei Fig. 1 und werden deshalb nicht nochmals beschrieben.

Zur Erläuterung der Wirkungsweise von Fig. 2 wird auf die nachfolgenden Figuren Bezug genommen.

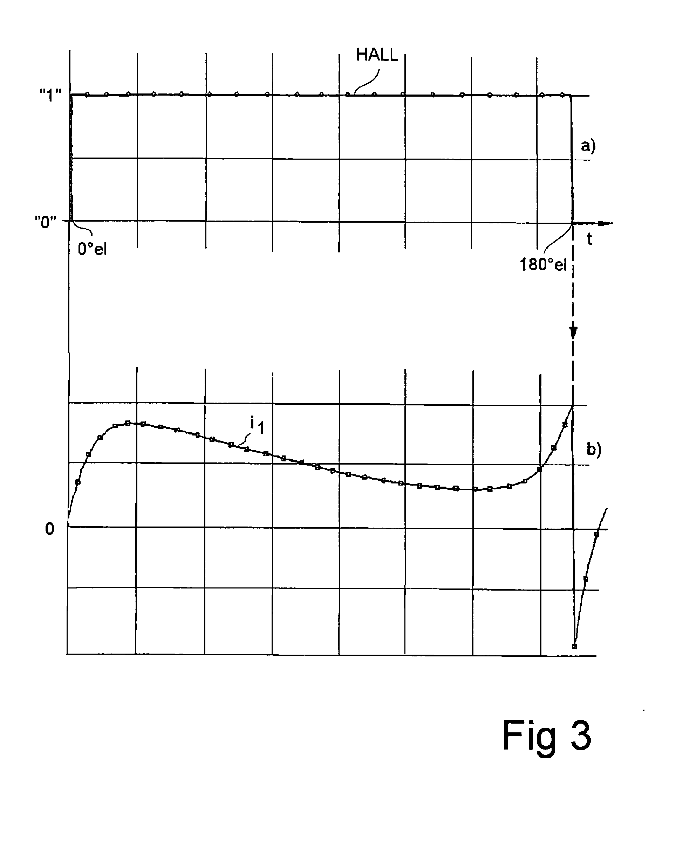

**Fig. 3** zeigt - aus didaktischen Gründen, also nur zur Erleichterung des Verständnisses - eine antiquierte Form der Kommutierung. Oben ist das Ausgangssignal 34 des Rotorstellungssensors 30 dargestellt, das mit "HALL" bezeichnet ist. Dieses Signal hat während 180° el. der Drehung des Rotors 28 den Wert "1" und während der anschließenden 180° el. den Wert "0", und diese alternierende Folge von Werten 0 - 1 - 0 - 1 - 0.... wiederholt sich ständig. Zwischen diesen Werten liegen Übergänge, d.h. bei 0° el. geht dieses Signal "0" nach "1 ", und bei 180° el. geht es von "1" nach "0", etc. Diese Übergänge steuern in Fig. 2 die Transistoren T1 bis T4.

Z.B. können bei HALL = "0" die beiden Transistoren T1 und T4 leitend sein, und die Transistoren T2 und T3 sind in diesem Fall nicht leitend, weil ja sonst in der H-Brücke 22 ein Kurzschluss entstehen würde.

Beim Übergang von HALL = "0" auf HALL = "1" werden - wegen dieser Gefahr eines Kurzschlusses - zunächst alle vier Transistoren kurzzeitig gesperrt, z.B. während 30 μs, und anschließend werden die Transistoren T2 und T3 leitend gesteuert, und die Transistoren T1 und T4 bleiben nichtleitend.

Beim Sperren der beiden Transistoren T1 und T4 ist im Wicklungsstrang 26 eine erhebliche magnetische Energie gespeichert, nämlich

$$W = 0{,}5 * L * i^2 \qquad\qquad ... (1),$$

wobei L = Induktivität des Wicklungsstranges 26, und

i = Strom im Strang 26 im Augenblick des Sperrens des Transistors T1.

Diese Energie wird im Zwischenkreiskondensator 48 gespeichert, der deshalb in diesem Fall sehr groß sein muss. Dies ist deshalb unerwünscht, weil in einem Motor der Platz für ein solch großes elektrisches Bauteil fehlt, und weil die erheblichen niederfrequenten Wechselströme, die durch einen solchen Kondensator 48 fließen, diesen stark erwärmen und seine Lebensdauer verkürzen. Wenn der Kondensator 48 stirbt, ist der Motor defekt und muss gewöhnlich ersetzt werden.

Deshalb ist es wünschenswert, dass dieser so genannte rückgespeiste Strom, auch Rückstrom oder Rippelstrom (ripple current) genannt, der zum Kondensator 48 fließt, möglichst klein gehalten wird und einen Wert in der Größenordnung von 0 hat, weil sich dadurch automatisch die Lebensdauer des Motors 20 erhöht.

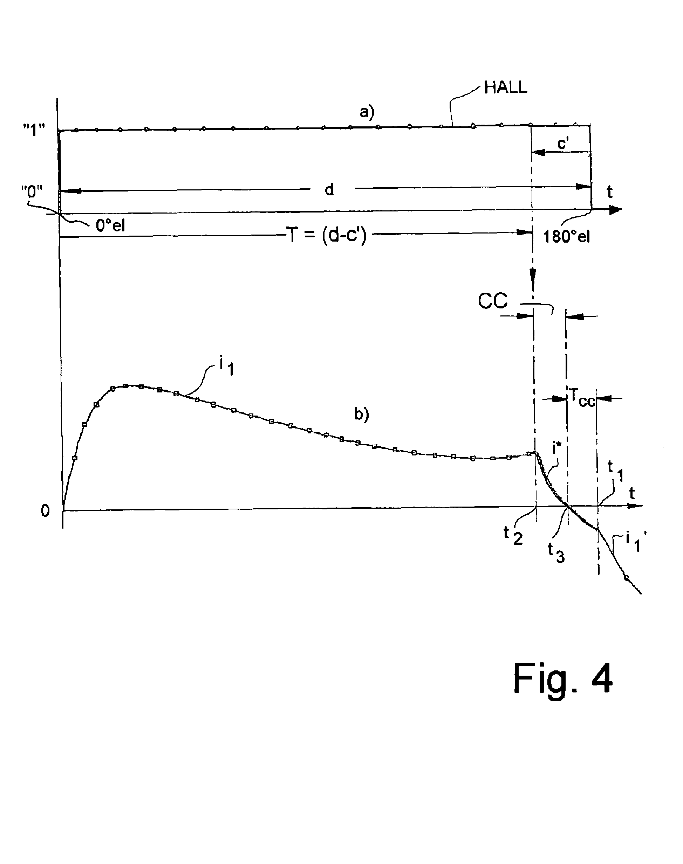

**Fig. 4** zeigt eine bekannte Methode, mit der der rückgespeiste Strom verringert werden kann. Oben ist wieder das Hallsignal HALL dargestellt. Bei diesem wird der zeitliche Abstand d zwischen zwei Signaländerungen gemessen. Wenn der Motor 20 etwa mit konstanter Drehzahl läuft, ist dieser zeitliche Abstand d weitgehend konstant, d.h. er kann z.B. auch während einer der vorhergehenden Umdrehungen gemessen werden.

Von diesem Wert d wird eine empirisch ermittelte Konstante c' subtrahiert, so dass man eine Zeitdauer

$$T = d - c' \qquad\qquad ...(2)$$

erhält, und diese Zeitdauer T wird ab einer bestimmten Rotorstellung, z.B. ab 0° el., gemessen, und wenn sie abgelaufen ist, wird der im Augenblick leitende obere Transistor T1 oder T2 nichtleitend gemacht, so dass dem Wicklungsstrang 26 von $U_B$ her keine Energie mehr zugeführt werden kann.

Der im Augenblick leitende untere Transistor T3 oder T4 wird nicht abgeschaltet, sondern bleibt weiterhin leitend.

Wenn z.B. am Ende des Zeitraums T die beiden Transistoren T1 und T4 leitend waren, so dass ein Strom i1 vom Knotenpunkt 52 durch den Strang 26 zum Knotenpunkt 54 floss, so wird der Strom, der bisher vom Anschluss $U_B$ über den Transistor T1 zum Knotenpunkt 52 floss, unterbrochen.

Der Strom durch den Wicklungsstrang 26 fließt nun weiter über den - immer noch leitenden - Transistor T4 und die Diode 58, und er hat die Form eines Kreisstroms i*, durch den der Rotor 28 weiterhin angetrieben wird, wobei dieser Kreisstrom i* innerhalb eines Zeitraums CC (Fig. 4 b) auf 0 fällt, ohne dass hierbei ein Rückstrom zum Kondensator 48 fließt. (CC = Current Circulates). Zum Zeitpunkt $t_3$ erreicht der Kreisstrom i* den Wert 0.

Im Anschluss an den Zeitpunkt $t_3$ ist die im Wicklungsstrang 26 gespeicherte elektromagnetische Energie verbraucht, so dass diese keinen Kreisstrom mehr erzeugen kann, aber der Motor 20 arbeitet jetzt als Generator, d.h. durch den rotierenden Rotor 28 (und die in diesem gespeicherte kinetische Energie) wird bis zum Zeitpunkt $t_1$ ein negativer Kreisstrom durch den - weiterhin kurzgeschlossenen -

Wicklungsstrang 26 erzeugt. Dies geschieht durch die so genannte induzierte Spannung oder Gegen-EMK, die durch den permanentmagnetischen Rotor 28 im Wicklungsstrang 26 induziert wird.

Dies bedeutet, dass die - empirisch ermittelte - Zeitspanne c' hier zu groß ist und die Zeitspanne $T_{cc}$ (vgl. Gleichung (4)) gleichfalls zu groß ist. (Diese Zeitspanne $T_{cc}$ sollte möglichst kurz sein und im Idealfall den Wert Null haben.)

Dies ist eine Folge davon, dass der empirisch ermittelte Wert c' nur ein Mittelwert sein kann, der freilich für viele Betriebszustände des Motors 20 kein Optimum darstellt. Dient der Motor 20 z.B. zum Antrieb eines Lüfters, so kann schon das Öffnen oder Schließen eines Fensters die Zeitdauern CC und $T_{cc}$ erheblich verändern.

Es ist darauf hinzuweisen, dass die im Betrieb im Wicklungsstrang 16 induzierte Spannung immer dem Strom i1 im Wicklungsstrang 16 entgegenarbeitet und dadurch die Zeit CC verkürzt.

Ist die Zeitspanne c' zu groß, so steigt der negative Strom zwischen den Zeitpunkten $t_3$ und $t_1$ als Folge der induzierten Spannung an. Deshalb erhält man in diesem Fall eine negative Spannungsspitze (Peak) am Messwiderstand 59, wenn man zum Zeitpunkt $t_1$ kommutiert und dort die Spannung $u_R$ misst. Eine solche negative Spannungsspitze am Widerstand 59 tritt deshalb auf, wenn CC zu groß ist, aber ebenso, wenn CC zu klein ist, d.h. diese Spannungsspitze zeigt nur an, dass c' keinen optimalen Wert hat, zeigt aber nicht an, ob c' zu kurz oder zu lang ist.

Erreicht man in Fig. 4 den ersten Zeitpunkt $t_1$, der bei diesem Beispiel durch die Änderung des Signals HALL von "1" nach "0" (oder umgekehrt) bestimmt ist, wird anschließend kommutiert, d.h. zuerst wird der Transistor T4 abgeschaltet, und dann werden nach ca. 30 $\mu$s die beiden Transistoren T2 und T3 eingeschaltet, so dass jetzt der Strom im Wicklungsstrang 26 von rechts nach links fließt, also vom Knotenpunkt 54 zum Knotenpunkt 52.

Bezeichnet man in Fig. 4 den Zeitpunkt, an dem die Energiezufuhr zum Motor 20 unterbrochen wird, so dass der Kreisstrom i* zu fließen beginnt, als zweiten Zeitpunkt $t_2$, und den Zeitpunkt, an dem der Kreisstrom i* = 0 geworden ist, als dritten Zeitpunkt $t_3$, so gilt

$$CC = t_3 - t_2 \qquad\qquad ... (3)$$

Für die Dauer $T_{cc}$ gilt analog

$$T_{CC} = t_1 - t_3 \qquad\qquad ... (4)$$

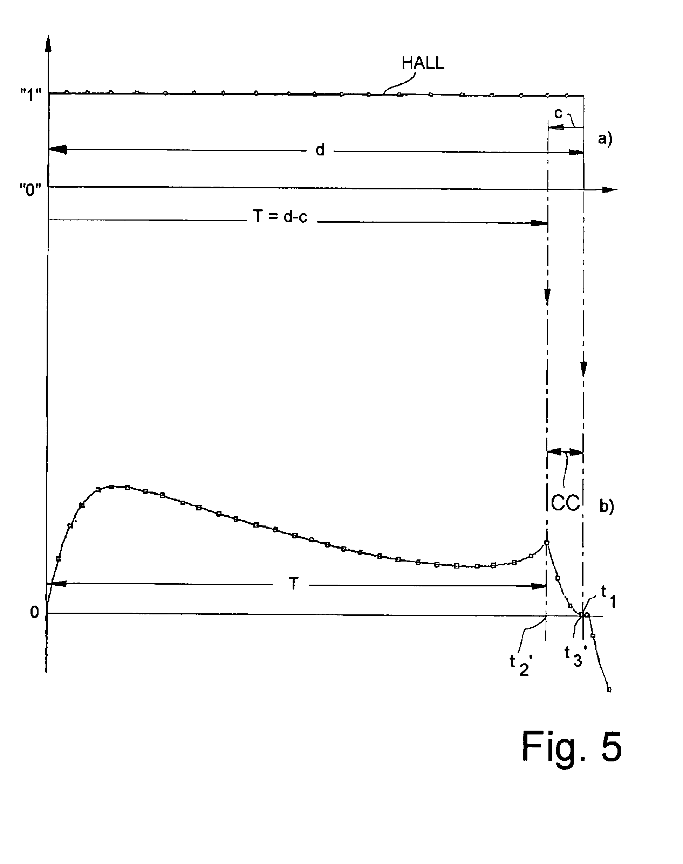

**Fig. 5** zeigt (in einer Simulation) das Resultat dieser Bemühungen. (Zu beachten: Es gilt jeweils nur der rechte Teil der Darstellungen.)

Die Zeitspanne CC, während deren ein Kreisstrom i* fließt, beginnt bei Fig. 5 im Vergleich mit Fig. 4 an einem späteren zweiten Zeitpunkt $t_2$' und dauert bis zu einem späteren dritten Zeitpunkt $t_3$', der ganz dicht beim ersten Zeitpunkt $t_1$ liegt, d.h. die Zeitspanne $T_{cc}$ (Fig. 4) ist praktisch auf 0 geschrumpft, was für eine stromlose Kommutierung ausreicht, weil ja in diesem Fall die Transistoren T1 bis T4 der H-Brücke 22 dann umschalten, wenn kein oder nur sehr wenig Strom i1 fließt, was man auch als leistungslose Kommutierung bezeichnet, und was die Lebensdauer des Motors erhöht.

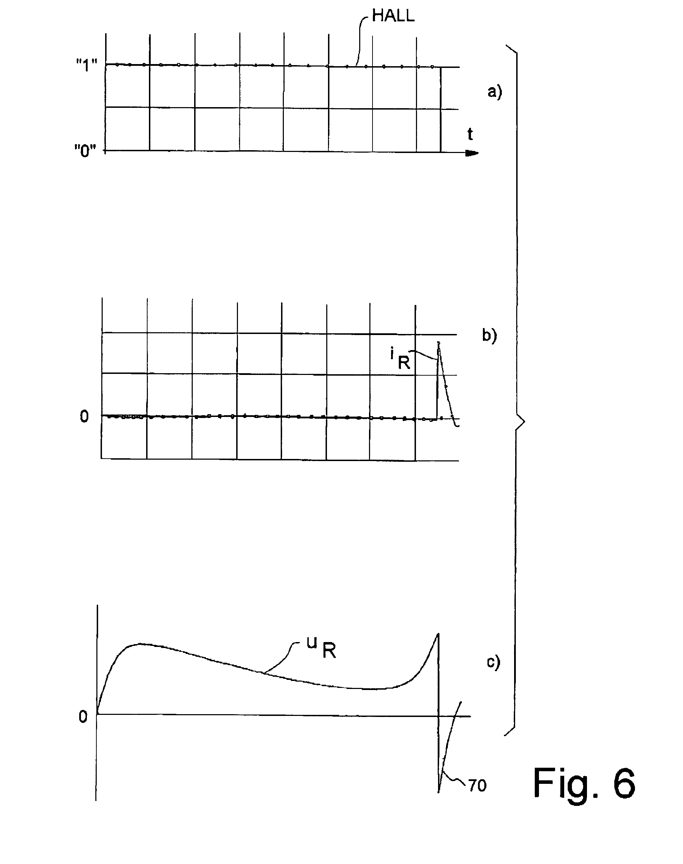

**Fig. 6** zeigt Signalverläufe, wie sie bei der (antiquierten) Kommutierung gemäß Fig. 3 auftreten.

Bei Fig. 3 wird der Strom i1 im Strang 26 brutal auf einen Strom in entgegengesetzter Richtung umgeschaltet, also ohne dass während des Übergangs ein Kreisstrom fließt.

Da sich der Strom, der durch den Strang 26 fließt, wegen der Induktivität L des Strangs 26 nicht sofort abbauen kann, wird die gespeicherte Energie in den Kondensator 48 zurückgespeist.

Fig. 6 a) zeigt ebenso wie Fig. 3 a) das Signal des Sensors 30.

Fig. 6 b) zeigt den Strom $i_R$ durch den Messwiderstand 59, welcher Strom hierbei in den Kondensator 48 fließt und dort kurzzeitig gespeichert wird. Erst wenn dieser Strom zu Null geworden ist, kann im Strang 26 ein Strom aufgebaut werden, der bei dieser Rotorstellung ein Drehmoment erzeugt. Der hohe Strom $i_R$ (Fig. 6 b) reduziert die Lebensdauer des Kondensators 48 und verschlechtert den Wirkungsgrad des Motors 20.

Fig. 6 c) zeigt die Spannung $u_R$ am Messwiderstand 59. Man erkennt, dass nach der Änderung des Signals HALL ein negativer Spannungsimpuls 70 auftritt, der mit einem normalen A/D-Wandler nicht digitalisiert werden könnte. Aus diesem Grund ist es notwendig, das Signal $u_R$ am Widerstand 59 so weit ins Positive zu verschieben, dass am Eingang 66 des µC 36 nur positive Spannungen auftreten, damit eine Auswertung der Spannung $u_R$ durchgehend möglich ist.

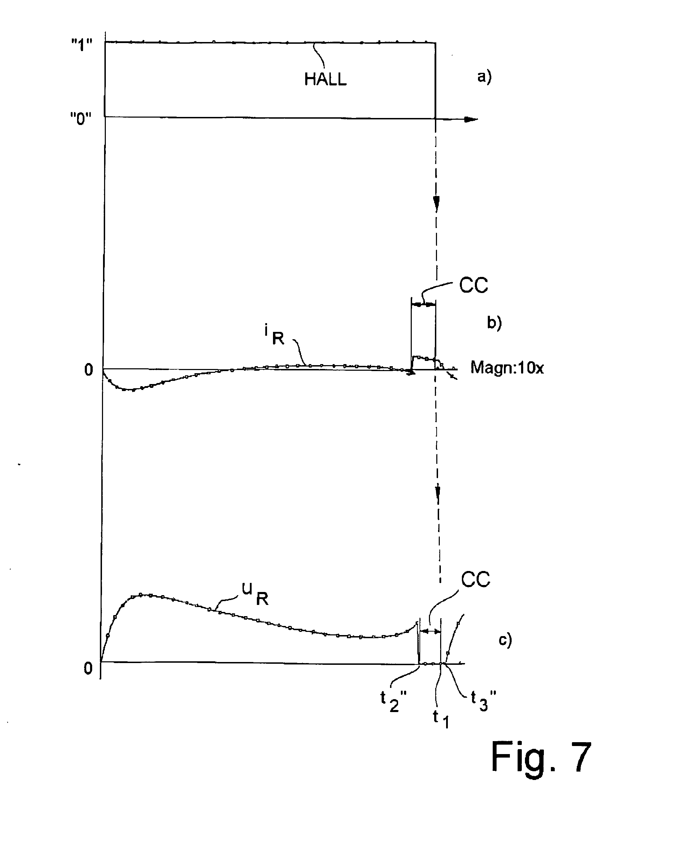

**Fig. 7** zeigt eine Darstellung analog Fig. 6, aber zum Diagramm nach Fig. 5, welches den Signalverlauf bei einem Motor mit Stromkreisen ("CC") zeigt. Bei der Umschaltung auf die entgegengesetzte Stromrichtung, wie sie zum Zeitpunkt $t_1$ stattfindet, können wegen der besseren Beherrschung des Kommutierungsvorgangs keine Spannungs- oder Stromspitzen auftreten.

Analog zu Fig. 6 b) wird in Fig. 7 b) ein Strom $i_R$, der durch die im Strang 26 gespeicherte Energie W verursacht wird und zum Kondensator 48 fließt, dargestellt. Da dieser Strom extrem niedrig ist, ist seine Amplitude gegenüber Fig. 6 b) um einen Faktor 10 vergrößert dargestellt, da sonst eine zeichnerische Darstellung nicht möglich wäre. Der in Fig. 7 b) dargestellte Strom $i_R$ ist für eine optimale Einstellung dargestellt, bei der schon vor dem Zeitpunkt $t_1$ der Strom i1 im Strang 26 durch Stromkreisen weitgehend in mechanische Energie umgewandelt ist und dadurch zu Null wird, d.h. die magnetische Energie nimmt ab, und dafür nimmt die mechanische Energie zu. Deshalb fließt nur ein minimaler Strom $i_R$ in den Kondensator 48. Man kann es auch so ausdrücken, dass ein solcher Motor einen sehr niedrigen Blindstrombedarf hat.

Fig. 7 c) zeigt die Spannung $u_R$ am Messwiderstand 59. Während bei Fig. 6 c) eine starke negative Spannungsspitze 70 auftritt, entfällt diese bei Fig. 7 c) vollständig, da bereits vor dem Zeitpunkt $t_1$ die magnetische Energie W (im Strang 26) weitgehend in mechanische Energie umgewandelt wurde. Die ermöglicht es, einen sehr kleinen Kondensator 48 zu verwenden, der gewöhnlich eine sehr hohe Lebensdauer hat, so dass für einen solchen Motor eine hohe Lebensdauer garantiert werden kann.

## Optimierung der Kommutierung

Zur Minimierung des Rückspeisestroms $i_R$ muss dieser zuerst ermittelt werden. Dies wird über den im µC befindlichen A/D-Wandler realisiert. Der Rückspeisestrom $i_R$ wird über den Messwiderstand 59 zeitlich exakt nach der Kommutierung gemessen, also nach dem Zeitpunkt $t_1$, da genau dann der ganze Rückspeisestrom messbar wird. Falls der Strom im Strang 26 durch das Stromkreisen nicht ganz abgebaut wurde, fließt er kurzzeitig durch den Widerstand 59 und über die beiden im Augenblick eingeschalteten Transistoren, z.B. T2 und T3, in den Kondensator 48. Wenn dieser Strom abgebaut ist, baut sich der Strom in der eigentlich gewollten Richtung wieder auf und kann ein Drehmoment auf den Rotor 28 erzeugen.

Der rückgespeiste Strom $i_R$ ist in Fig. 6 b) sehr gut erkennbar, da in diesem Fall vor der Kommutierung kein Stromkreisen durchgeführt wurde. Die Form des Wicklungsstroms i1 in Fig. 3 b), die entsteht, bevor in die Gegenrichtung kommutiert wird, sorgt für einen hohen rückgespeisten Strom $i_R$ in den Kondensator 48.

Bei einer Kommutierung mit Stromkreisen (Fig. 6 und 7) ist dieser Strom $i_R$ viel geringer. Der rückgespeiste Strom $i_R$, der in den Kondensator 48 fließt, ist am Messwiderstand 59 als negative Spannung messbar, siehe hierzu Fig. 6 c), dort die negative Spannungsspitze 70, und den zugehörigen Text.

## Anpassung der Stromkreiszeit CC

Nachdem der in den Kondensator 48 rückgespeiste Strom $i_R$ über den Widerstand 59 gemessen wurde, wird die Stromkreiszeit CC erhöht oder erniedrigt, um den Rückspeisestrom bei der nächsten Kommutierung noch kleiner zu machen. Das wird über den Timer 73 im µC 36 realisiert. Zwei Probleme, welche hierbei entstehen, sind, dass die Spannung $u_R$ am Messwiderstand 59, welche durch den Rückspeisestrom $i_R$ erzeugt wird, negativ werden kann, unabhängig davon, ob die Stromkreiszeit CC zu hoch oder zu niedrig gewählt wurde. Dies ist gut an Fig. 6 c) (Kommutierung ohne Stromkreisen) zu erkennen. In Fig. 6 b) ist der Strom $i_R$ zum Kondensator 48 dargestellt, in Fig. 6 c) die Spannung $u_R$, und in Fig. 5 der Strom im Strang 26. Der rückgespeiste Strom ist als negative Spannungsspitze 70 sichtbar.

In den Simulationen gemäß den Fig. 6 und 7 wurde dasselbe, jedoch mit Stromkreisen, simuliert. Es ist erkennbar, dass die negative Spannungsspitze 70 (Fig. 6 c) der Spannung $u_R$ bei der Simulation gemäß Fig. 7 verschwunden ist, da zum Zeitpunkt $t_1$ der Wicklungsstrom durch das Stromkreisen bereits abgebaut wurde. Eine zusätzliche Erkenntnis, die man in Fig. 7 c) gewinnen kann, wird durch die Spannung $u_R$ während der Zeit des Stromkreisens offenkundig. Diese Spannung $u_R$ hat den Wert Null, da in dieser Zeit kein Motorstrom durch den Messwiderstand 59 fließt.

**Anhebung der am Widerstand 59 gemessenen Spannung in positiver Richtung**

Um das erste Problem (negative Spannung $u_R$ am Widerstand 59) zu lösen, wird diese Spannung mittels des Spannungsteilers 67, 68 um einen positiven Offset soweit angehoben, dass sie zu jedem Zeitpunkt, und vor allen Dingen zum Zeitpunkt der Rückspeisung in den Kondensator 48, positiv ist. Damit ist gewährleistet, dass der Rückspeisestrom $i_R$ mit Hilfe des A/D-Wandlers im $\mu$C 36 erfasst, also digitalisiert, werden kann. Dies wurde bei den Fig. 1 und 9 erläutert.

**Nullpunkterfassung der Spannung $u_R$**

Zur genaueren Messung wird der Nullpunkt der Spannung am Widerstand 59, also wenn kein Strom $i_R$ vom oder zum Motor durch den Widerstand 59 fließt, erfasst. Diese Erfassung erfolgt während der Stromkreiszeit CC, während deren der Strom im unteren Zweig 56 der H-Brücke 22 sich im idealen Fall zu Null abbaut, bevor kommutiert wird. In dieser Zeit würde, wie erwähnt, die Spannung am Widerstand 59 Null Volt betragen, hat aber durch die Maßnahmen zur Potenzialverschiebung die Offsetspannung des Spannungsteilers 67, 68, welcher benötigt wird, um die Spannung am Widerstand 59 über den A/D-Wandler messbar zu machen. Der Nullpunkt muss auf diese Weise nicht in der Software vorgegeben werden. Wird der Spannungsteiler 67, 68 anders dimensioniert, so muss man an der Software nichts ändern, da der Nullpunkt, also die Spannung $U_{zero}$, automatisch erfasst und der Motor neu kalibriert wird. Auch gegenüber Toleranzproblemen der Widerstände 67, 68 ist man auf diese Weise geschützt, z.B. bei Temperaturänderungen.

**Softwarealgorithmus zur Ermittlung, ob die Stromkreiszeit CC zu hoch oder zu niedrig ist**

Das zweite Problem ist, dass bei nicht optimal eingestellter Stromkreiszeit CC die Spannung am Messwiderstand 59 immer negativ ist, egal ob die Stromkreiszeit zu klein oder zu groß ist, d.h. man kann dem Wert $u_R$ nicht entnehmen, ob CC zu groß oder zu klein ist. Dies kann jedoch durch den Softwarealgorithmus 200 der Fig. 8 indirekt ermittelt werden. Im Folgenden wird dieser beschrieben.

Im Schritt S180 wird geprüft, ob sich der Motor 20 im Bereich CC (z. B. Fig. 4 oder Fig. 5) befindet, d. h. ob der Kreisstrom i* eingeschaltet ist. Falls Nein, geht die Routine zurück zum Anfang. Falls Ja, wird im folgenden Schritt S182 (GET $U_{zero}$) der digitale Wert $U_{zero}$ gemessen und gespeichert.

Anschließend wird im Schritt S184 (COM) geprüft, ob eine Kommutierung eingeleitet wurde, also eine Änderung der Stromrichtung im Wicklungsstrang 26. Bei Motoren mit höherer Leistung wird die Kommutierung meist nicht direkt durch das Signal HALL gesteuert, sondern ab der vorhergehenden Änderung des Signals HALL wird eine Zeit gemessen, die kleiner ist als die Zeitdauer d in Fig. 4a oder 5a, und nach Ablauf dieser Zeitdauer wird kommutiert, d. h. einer der beiden unteren Halbleiterschalter S3, S4 wird nichtleitend gemacht, und der zugeordnete obere Halbleiterschalter S1 oder S2 wird leitend gemacht. Wenn dies der Fall ist, wird im Schritt S186 die augenblickliche Spannung $u_{67}$ gemessen und gespeichert.

Anschließend wird im Schritt S202 geprüft, ob $u_{67} = U_{zero}$ ist. Falls Ja, befindet sich die Regelung in einem optimierten Zustand, und folglich geht die Routine direkt zurück zum Schritt S180, wo die nächste Zeitspanne CC (Stromkreisen) abgewartet wird.

Falls in S202 die Antwort Nein lautet, wird im nächsten Schritt S204 nach der Formel

$$U_{dif} = u_{67} - U_{zero} \qquad\qquad ... (5)$$

eine Differenzspannung $U_{dif}$ gebildet. Ein hoher Wert von $U_{dif}$ bedeutet, dass die Kommutierung weit von einem optimalen Zustand entfernt ist und folglich eine große zeitliche Korrektur $\Delta T$ erforderlich ist.

Im nächsten Schritt S206 wird die Höhe der Korrektur $\Delta T$ als Funktion der Größe von $U_{dif}$ bestimmt, z. B. nach der Formel

$$\Delta T = a * U_{dif} \qquad\qquad ... (6)$$

Hierbei ist a eine Konstante, und das Resultat der Berechnung lag bei einem Versuchsmotor im Bereich 1 bis 50 $\mu$s.

Alternativ ist auch die Berechnung nach anderen Formeln möglich, oder in der Weise, dass z. B. kleinen Werten von $U_{dif}$ ein $\Delta T$ von 1 $\mu$s zugeordnet wird, mittleren Werten ein $\Delta T$ von 10 $\mu$s, und hohen Werten ein $\Delta T$ von 50 $\mu$s. Generell ist es im Interesse einer schnellen Regelung wünschenswert, bei großen Werten von $U_{dif}$ auch große Werte von $\Delta T$ zu verwenden, da sonst die Regelung langsam wird. Jedoch ist auch eine Regelung in der Weise nicht ausgeschlossen, dass bei einem Wert von $U_{dif}$ der von Null abweicht, ein Wert von $\Delta T$ = konstant verwendet wird.

Die Routine 200 beginnt nach jeder Kommutierung von Neuem.

Die Messung der Spannung $U_{zero}$ erfolgt also während der Zeitspanne CC, da während dieser kein Strom durch den Widerstand 59 fließt und folglich die Spannung $U_{zero}$ am Widerstand 67 dem tatsächlichen Strom $i_R = 0$ entspricht. Wegen der Potenzialverschiebung in positive Richtung hat dann die Spannung $U_{zero}$ am Eingang 66a einen positiven Wert, da der A/D-Wandler im Mikrocontroller 36 nur positive Werte verarbeiten kann, und da die tatsächliche Spannung $u_R$, wie bei Fig. 6 c) beschrieben, auch negativ werden kann. Diese Messung hat den Vorteil, dass sich die Anordnung ständig selbst kalibriert, z. B. bei einer Änderung der Widerstände 67, 68.

Wie bereits erläutert, hat man das Problem, dass bei ungenau eingestellter Zeit T die tatsächliche Spannung $u_R$ immer negativ ist, unabhängig davon, ob T zu kurz oder zu lang ist, so dass man aus der Polarität von $u_R$ nicht entnehmen kann, in welche Richtung der Zeitpunkt $t_2$ (Fig. 4) verschoben werden sollte.

Man muss nun ermitteln, ob der Wert T um den Wert $\Delta T$ erniedrigt oder erhöht werden muss. Deshalb wird in S208 ermittelt, ob der rückgespeiste Strom gegenüber der letzten Messung zu- oder abgenommen hat. Die alte Differenzspannung $U_{dif}$ aus der vorhergehenden Messung wurde in einer Variablen $U_{dif\_old}$ abgelegt und wird mit dem soeben ermittelten Wert $U_{dif}$ verglichen. Ist der rückgespeiste Strom $i_R$ kleiner geworden, d.h. die Antwort in S208 lautet Ja, so wurde die letzte Korrekturaktion in der richtigen Richtung durchgeführt, und deshalb wird sie in der gleichen Richtung wiederholt, damit der Rückspeisestrom noch niedriger wird. Ist aber der rückgespeiste Strom größer geworden, so ging die letzte Korrekturaktion in die falsche Richtung, und die neue Aktion muss in der entgegengesetzten Richtung erfolgen.

Wenn also in S208 festgestellt wird, dass $U_{dif}$ abgenommen hat, so wird in S210 geprüft, ob beim letzten Regelvorgang die Zeitspanne T = d-c' erhöht wurde. Falls Ja, wird in S212 diese Aktion wiederholt, d. h. die Zeitspanne T wird erneut vergrößert, so dass der zweite Zeitpunkt $t_2$ näher an den Zeitpunkt $t_1$ herangerückt wird, in dem durch das Signal des Sensors 30 kommutiert wird.

Wird dagegen in S21 0 festgestellt, dass beim vorhergehenden Regelvorgang die Zeitspanne T verkleinert wurde, so wird im nachfolgenden Schritt S214 die Zeitspanne T erneut verkleinert.

Wird im Schritt S208 festgestellt, dass die Spannung $U_{dif}$ zugenommen hat, was bedeutet, dass als Folge des vorhergehenden Durchlaufs eine Verschlechterung (oder jedenfalls keine Verbesserung) eingetreten ist, so wird in S216 geprüft, ob beim vorhergehenden Regeldurchlauf die Zeit T verkleinert wurde. Diese Maßnahme darf dann nicht mehr wiederholt werden, und deshalb wird im Schritt S218 die Zeit T um $\Delta T$ vergrößert, und falls in S216 festgestellt wurde, dass bei der letzten Aktion die Zeit T vergrößert wurde, wird sie im folgenden Schritt S220 um $\Delta T$ verkleinert.

Im Anschluss an die Schritte S212, S214, S218 und S220 wird dann im Schritt S222 der Timer 73 im $\mu$C 36 mit dem geänderten Wert T geladen, und der Wert $U_{dif\_old}$ wird durch den neuen Wert $U_{dif}$ ersetzt.

Beim nächsten Kommutierungsvorgang wird dann der Algorithmus 200 erneut durchlaufen. Ggf. ist es auch möglich, den Algorithmus, oder Teile von ihm, weniger häufig zu durchlaufen, z. B. nur nach jeder 10. oder nach jeder 100. Kommutierung.

In S202 wird also zum Zeitpunkt $t_1$ geprüft, ob am Messwiderstand 59 ein negativer Stromimpuls gemessen wird. Wenn dies nicht der Fall ist, d.h. die Antwort in S202 Ja, d.h. die Stromkreiszeit CC ist korrekt eingestellt, wird deshalb nicht verändert, und die Routine geht direkt zum Schritt S222, wo im Timer 73 der Wert $U_{dif}$ anstelle des vorhergehenden Wertes $U_{dif\_old}$ gespeichert wird.

Lautet in S202 die Antwort Nein, so hat die Stromkreiszeit CC keinen optimalen Wert und wird deshalb verändert. Als erstes wird deshalb im Schritt S204 die Differenzspannung $U_{dif}$ ermittelt. Dies ist die Differenz zu der in Fig. 9 erläuterten charakteristischen Spannung $U_{zero}$, die ermittelt wird, z.B. wenn im Wicklungsstrang 26 der Kreisstrom i* fließt. Die Größe $U_{dif}$ ist ein Indiz dafür, ob die Zeitspanne CC viel oder wenig daneben liegt, also sehr falsch oder weniger falsch ist. Im Schritt S206 wird dann das $\Delta T$ festgelegt, abhängig von der Höhe des negativen Strompeaks am Messwiderstand 59.

Bis zu diesem Zeitpunkt weiß man aber noch nicht, ob die Stromkreiszeit CC erhöht oder erniedrigt werden muss. Dies ist eine Folge davon, dass der negative Stromimpuls am Messwiderstand 59 gleichermaßen entsteht, wenn die Stromkreiszeit CC zu niedrig oder wenn sie zu hoch eingestellt ist.

Deshalb wird in S208 geprüft, ob der negative Stromimpuls kleiner ist als bei der vorhergehenden Messung. Ist dies der Fall, so war die Korrekturaktion bei der zuvor gemachten Messung richtig, und diese Korrekturaktion (CC erhöhen oder CC erniedrigen) muss wiederholt werden. Im Schritt S21 0 wird geprüft, welche Aktion zuvor durchgeführt wurde, und diese Aktion wird anschließend in S212 oder in S214 erneut durchgeführt.

S216 betrifft den Fall, dass sich der Wert $U_{dif}$, der in S204 ermittelt wurde, gegenüber der zuvor gemachten Messung verschlechtert hat, d.h. die Korrekturaktion, welche zuvor durchgeführt wurde, war falsch, und es muss nun genau das Gegenteil gemacht werden. War also die letzte Aktion eine Erniedrigung des Wertes CC (S216 = Ja), dann wird die Stromkreiszeit CC jetzt um den Wert T erhöht. War die letzte Aktion jedoch eine Erhöhung der Stromkreiszeit CC, d.h. im Schritt S216 lautet die Antwort Nein, so muss die Stromkreiszeit CC um den Wert T reduziert werden.

Auf diese Weise nähert sich die Stromkreiszeit CC immer mehr dem richtigen Wert, der für die augenblicklichen Betriebsbedingungen optimal ist.

Ändern sich die Betriebsbedingungen, so tritt der Korrekturalgorithmus 200 erneut in Funktion, und die Stromkreiszeit CC wird an diese neuen Betriebsbedingungen angepasst.

In Fig. 8 folgt auf die Schritte S212, S214, S218 und S220 der Schritt S222, der bereits beschrieben wurde.

Bei einer Änderung der Last oder einer Änderung der Betriebsspannung $U_B$ passt sich also die Stromform allmählich den neuen Betriebsbedingungen an. Dieser Vorgang kann sehr gut am Oszilloskop durch Betrachten der Stromform beobachtet werden. Der Vorgang wird langsam realisiert, um keine Stromasymmetrien durch schnelle Lastwechsel hervor zu rufen. Bis die Dauer der Zeit T optimal eingestellt ist, können in der Praxis ein bis zwei Minuten vergehen. Durch die Optimierung der Stromkreiszeit CC erhöhen sich im Laufe der adaptiven Regelung auch Drehzahl und Wirkungsgrad.

Sehr vorteilhaft ist, dass nur ein Minimum an zusätzlicher Hardware benötigt wird, sofern ein Mikrocontroller verwendet wird, denn dann benötigt man nur die Widerstände 67 und 68, während der Rest durch die kurze zusätzliche Programmroutine 200 im Mikrocontroller erledigt wird. Mit einem minimalen Mehraufwand erhält man also einen Motor mit verbesserten Eigenschaften.

Naturgemäß sind im Rahmen der vorliegenden Erfindung vielfache Abwandlungen und Modifikationen möglich.

## Patentansprüche

1. Elektronisch kommutierter Motor (20),

   mit einem Rotor (28) und einem diesem zugeordneten Rotorstellungssensor (30), der im Betrieb zumindest an vorgegebenen Drehstellungen des Rotors (28) ein Drehstellungssignal (34) bereit stellt,

   und mit einem mit dem Rotor (28) in Wechselwirkung stehenden Stator, welcher mindestens einen Stator-Wicklungsstrang (26) aufweist, welch letzterer in der Diagonalen (24) einer H-Brücke (22) angeordnet ist,

   welche H-Brücke (22) auf einer ersten Seite (44) zur Verbindung mit einem ersten Pol ($+U_B$) einer Gleichspannungsquelle ausgebildet ist,

   und auf einer zweiten Seite (62) mit einem Messwiderstand (59) verbunden ist, welcher Messwiderstand (59) zur Verbindung mit einem zweiten Pol (50) dieser Gleichspannungsquelle ausgebildet ist, so dass im Betrieb über den Messwiderstand (59) ein Strom ($i_R$) zwischen der zweiten Seite (62) der H-Brücke (22) und dem zweiten Pol (50) fließt und dabei im Messwiderstand (59) einen entsprechenden Spannungsabfall ($u_R$) verursacht,

   wobei die erste Seite (44) mit einem - im Folgenden als Zwischenkreis-Kondensator bezeichneten - Kondensator (48) verbunden ist, und mit einer Steuervorrichtung (36), welche dazu ausgebildet ist, im Betrieb folgende Schritte auszuführen:

   Die H-Brücke (22) wird so gesteuert, dass der ihr zugeordnete Stator-Wicklungsstrang (26) von Stromimpulsen (+ i1, - i1) durchflossen wird, zwischen denen jeweils im Bereich eines von einem Drehstellungssignal (34) des Rotorstellungssensors (30) beeinflussten ersten Zeitpunkts ($t_1$) die Richtung des dem Stator-Wicklungsstrang (26) zugeführten Stromes durch einen Kommutierungsvorgang auf eine zur vorhergehenden Stromrichtung entgegengesetzte Richtung umgeschaltet wird;

   jeweils am Beginn eines Kommutierungsvorgangs wird ab einem zweiten Zeitpunkt ($t_2$) der in der Diagonalen der H-Brücke (22) angeordnete Stator-Wicklungsstrang (26) durch entsprechende Ansteuerung der H-Brücke (22) im Kurzschluss betrieben, um einen abnehmenden Kreisstrom (i*) durch den Stator-Wicklungsstrang (26) zu bewirken, welcher Kreisstrom (i*) zu einem dritten Zeitpunkt ($t_3$) den Wert Null erreicht;

   der zeitliche Abstand ($T_{cc}$) zwischen erstem Zeitpunkt ($t_1$) und drittem Zeitpunkt ($t_3$) wird durch Veränderungsschritte zumindest in der Mehrzahl dieser Schritte in Richtung auf ein Minimum verändert.

2. Motor nach Anspruch 1, bei welchem die Steuervorrichtung (36) dazu ausgebildet ist, die Richtung eines Veränderungsschritts abhängig vom Resultat wenigstens eines vorhergehenden Veränderungsschritts zu steuern.

3. Motor nach Anspruch 1 oder 2, bei welchem die Steuervorrichtung (36) so ausgebildet ist, dass der dritte Zeitpunkt ($t_3$) wenigstens in der Mehrzahl der Fälle zeitlich nach dem ersten Zeitpunkt ($t_1$) liegt.

4. Motor nach einem der vorhergehenden Ansprüche, bei welchem in der H-Brücke (22) mindestens eine Freilaufdiode (58, 60) vorgesehen ist, über welche im Betrieb der Kreisstrom (i*) fließt.

5. Motor nach einem der vorhergehenden Ansprüche, bei welchem im Betrieb zwischen dem Stator-Wicklungsstrang (26) und dem Zwischenkreis-Kondensator (48) ein Wechselstrom fließt, und die Größe dieses Wechselstroms abhängig von der Höhe eines beim Kommutierungsvorgangs durch den Messwiderstand (59) fließenden Stromes ($i_R$) in Richtung auf ein Minimum verändert wird.

**6.** Motor nach einem der vorhergehenden Ansprüche, bei welchem der Steuervorrichtung (36) ein A/D-Wandler (66) zur Digitalisierung eines stromabhängigen Signals ($u_{67}$) zugeordnet ist, das von dem Spannungsabfall ($u_R$) am Messwiderstand (59) abgeleitet ist.

**7.** Motor nach Anspruch 6, bei welchem dem Eingang des A/D-Wandlers (66) eine Anordnung (63, 67, 68) zur Potenzialverschiebung für das Eingangssignal des A/D-Wandlers (66) zugeordnet ist, mittels welcher alle im Betrieb vorkommenden Werte dieses Eingangssignals in Bereiche einer Polarität verschiebbar sind, in denen durch den A/D-Wandler (66) eine Digitalisierung des ihm zugeführten Signals ($u_{67}$) möglich ist.

**8.** Motor nach Anspruch 7, bei welchem zur Potenzialverschiebung ein Netzwerk aus Widerständen (63, 67, 68) vorgesehen ist, das an ein Gleichspannungspotenzial ($+V_{cc}$) angeschlossen ist, in dessen Richtung die Potenzialverschiebung gewünscht wird.

**9.** Motor nach Anspruch 7 oder 8, bei welchem die Anordnung (63, 67, 68) zur Potenzialverschiebung im Betrieb einen charakteristischen Wert ($U_{zero}$) am Eingang (66a) des A/D-Wandlers (66) verursacht, welcher charakteristische Wert ein Spannungswert ist und messbar ist, wenn im Motor (20) ein Kreisstrom ($i^*$) fließt.

**10.** Motor nach einem der Ansprüch 6 bis 9, bei welchem das stromabhängige Signal ($u_{67}$) während des Fließens des Kreisstroms ($i^*$) einen charakteristischen Wert ($U_{zero}$) annimmt, der das Fehlen eines Stromes durch den Messwiderstand (59) anzeigt,
und eine Abweichung des stromabhängigen Signals ($u_{67}$) von diesem charakteristischen Wert ($U_{zero}$) das Ende eines zuvor fließenden Kreisstromes ($i^*$) anzeigt.

**11.** Motor nach Anspruch 10, bei welchem die Steuervorrichtung dazu ausgebildet ist, beim Vorliegen eines vom charakteristischen Wert ($U_{zero}$) abweichenden Signalwerts ($u_{67}$) zu prüfen, ob sich die Differenz ($U_{dif}$) zwischen dem charakteristischen Wert ($U_{zero}$) und dem aktuellen Wert ($u_{67}$) gegenüber der vorhergehenden Messung durch den dort vorgenommenen Veränderungsschritt vergrößert oder verkleinert hat,
und beim Vorliegen einer vergrößerten Differenz ($U_{dif}$) einen zum dort vorgenommenen Veränderungsschritt entgegengesetzten Veränderungsschritt auszuführen, um die Differenz ($U_{dif}$) zu reduzieren.

**12.** Motor nach Anspruch 10 oder 11, bei welchem die Steuervorrichtung (36) dazu ausgebildet ist, beim Vorliegen eines vom charakteristischen Wert ($U_{zero}$) abweichenden aktuellen Werts ($u_{67}$) zu prüfen, ob mit der Differenz ($U_{dif}$) zwischen dem charakteristischen Wert ($U_{zero}$) und dem aktuellen Wert ($u_{67}$) gegenüber der vorhergehenden Messung durch den vorhergehenden Veränderungsschritt vergrößert oder verkleinert hat,
und beim Vorliegen einer verkleinerten Differenz ($U_{dif}$) einen erneuten, dem dort vorgenommenen Veränderungsschritt analogen Veränderungsschritt auszuführen.

**13.** Motor nach einem der Ansprüche 6 bis 12, bei welchem zwischen dem Messwiderstand (59) und dem A/D-Wandler (66) ein Tiefpass (63, 64) vorgesehen ist.

**14.** Motor nach einem der vorhergehenden Ansprüche, bei welchem die Steuervorrichtung (36) so ausgebildet ist, dass sie durch einen Kommutierungsvorgang aktivierbar ist.

**Claims**

**1.** Electronically commutated motor (20),
having a rotor (28) and a rotor position sensor (30) associated therewith, which sensor, during operation, furnishes a rotational position signal (34), at least at predetermined rotational positions of the rotor (28),
and having a stator interacting with the rotor (28), which stator has at least one stator winding strand (26) that is arranged in the diagonal (24) of an H bridge (22),
which H bridge (22) is configured on a first side (44) for connection to a first pole ($+U_B$) of a DC voltage source,
and on a second side (62) is connected to a measuring resistor (59), which measuring resistor (59) is configured for connection to a second pole (50) of said DC voltage source, so that, during operation, a current ($i_R$) flows between the second side of the H bridge (22) and the second pole (50) via the measuring resistor (59) and thereby causes a corresponding voltage drop ($u_R$) in the measuring resistor (59),
the first side (44) being connected to a capacitor (48) - referred to hereinafter as a link circuit capacitor -,
and having a control apparatus (36) which is configured, during operation, to perform the following steps:

The H bridge (22) is controlled so that the stator winding strand (26) associated therewith has current pulses (+i1, -i1) flowing through it, between which pulses, in the region of a first point in time ($t_1$) that is influenced by a rotational position signal (34) of the rotor position sensor (30), the direction of the current delivered to the stator winding strand (26) is switched over by a commutation operation to a direction opposite to the previous current direction;

at the beginning of each commutation operation, starting from a second point in time ($t_2$), the stator winding strand (26), arranged in the diagonal of the H bridge (22), by corresponding control of the H bridge (22) is operated in short circuit in order to cause a decreasing circulating current ($i^*$) through the stator winding strand (26), which circulating current ($i^*$) reaches a value of zero at a third point in time ($t_3$);

the time interval ($T_{CC}$) between the first point in time ($t_1$) and the third point in time ($t_3$) is modified by modification steps, at least in the majority of these steps, towards a minimum.

2. Motor according to Claim 1, wherein the control apparatus (36) is configured to control the direction of a modification step as a function of the result of at least one preceding modification step.

3. Motor according to Claim 1 or 2, wherein the control apparatus (36) is configured so that the third point in time ($t_3$) lies, at least in the majority of cases, temporally after the first point in time ($t_1$).

4. Motor according to one of the preceding claims,
wherein there is provided in the H bridge (22) at least one freewheeling diode (58, 60), via which, during operation, the circulating current ($i^*$) flows.

5. Motor according to one of the preceding claims, wherein,
during operation, an alternating current flows between the stator winding strand (26) and the link circuit capacitor (48), and
the magnitude of said alternating current is modified towards a minimum as a function of the level of a current ($i_R$) flowing through the measuring resistor (59) in the commutation operation.

6. Motor according to one of the preceding claims,
wherein
the control apparatus (36) has associated therewith an A/D converter (66) for digitising a current-dependent signal ($u_{67}$) that is derived from the voltage drop ($u_R$) at the measuring resistor (59).

7. Motor according to Claim 6, wherein the input of the A/D converter (66) has associated therewith an arrangement (63, 67, 68) for shifting the potential for the input signal of the A/D converter (66), by means of which arrangement all values of this input signal that occur during operation are shiftable into regions of a polarity enabling a digitisation, by the A/D converter (66), of the signal ($u_{67}$) supplied thereto.

8. Motor according to Claim 7, wherein a network of resistors (63, 67, 68) is provided for potential shifting, which network is connected to a DC voltage potential ($+V_{CC}$) in the direction of which the potential shift is desired.

9. Motor according to Claim 7 or 8, wherein the arrangement (63, 67, 68) for potential shifting causes, during operation, a characteristic value ($U_{zero}$) at the input (66a) of the A/D converter (66), which characteristic value is a voltage value and is measurable when a circulating current ($i^*$) is flowing in the motor (20).

10. Motor according to one of Claims 6 to 9, wherein the current-dependent signal ($u_{67}$) assumes, while the circulating current ($i^*$) is flowing, a characteristic value ($U_{zero}$) that indicates the absence of a current through the measuring resistor (59),
and a deviation of the current-dependent signal ($u_{67}$) from said characteristic value ($U_{zero}$) indicates the end of a circulating current ($i^*$) that was previously flowing.

11. Motor according to Claim 10, wherein the control apparatus is configured to check, when a signal value ($u_{67}$) deviating from the characteristic value ($U_{zero}$) is present, whether the difference ($U_{dif}$) between the characteristic value ($U_{zero}$) and the current value ($u_{67}$) has increased or decreased compared with the preceding measurement due to the modification step performed there,
and when an increased difference ($U_{dif}$) exists, to carry out a modification step opposite to the modification step performed there, in order to reduce the difference (Udif).

**12.** Motor according to Claim 10 or 11, wherein the control apparatus (36) is configured to check, when a current value ($u_{67}$) deviating from the characteristic value ($U_{zero}$) is present, whether with the difference ($U_{dif}$) between the characteristic value ($U_{zero}$) and the current value ($u_{67}$) has increased or decreased compared with the preceding measurement due to the preceding modification step,
and when a decreased difference ($U_{dif}$) exists, to carry out another modification step analogous to the modification step performed there.

**13.** Motor according to one of Claims 6 to 12, wherein a low-pass filter (63, 64) is provided between the measuring resistor (59) and the A/D converter (66).

**14.** Motor according to one of the preceding claims, wherein the control apparatus (36) is so configured


**Revendications**

**1.** Moteur à commutation électronique (20),
avec un rotor (28) et un capteur de position de rotor (30) associé à celui-ci, qui, en fonctionnement, fournit un signal de position de rotation (34) au moins à des positions de rotation prédéfinies du rotor (28),
et avec un stator en interaction avec le rotor (28), lequel présente au moins une branche d'enroulement statorique (26) qui est disposée dans la diagonale (24) d'un pont en H (22),
lequel pont en H (22) est conçu d'un premier côté (44) pour la liaison avec un premier pôle ($+U_B$) d'une source de tension continue,
et est relié d'un deuxième côté (62) à une résistance de mesure (59), laquelle résistance de mesure (59) est conçue pour la liaison avec un deuxième pôle (50) de cette source de tension continue, de sorte qu'en fonctionnement, un courant ($i_R$) circule par la résistance de mesure (59) entre le deuxième côté (62) du pont en H (22) et le deuxième pôle (50) et provoque ce faisant une chute de tension ($u_R$) correspondante dans la résistance de mesure (59),
le premier côté (44) étant relié à un condensateur (48) désigné dans la suite par condensateur de circuit intermédiaire,
et avec un dispositif de commande (36) qui est conçu pour exécuter les étapes suivantes en fonctionnement :

le pont en H (22) est commandé de façon que la branche d'enroulement statorique (26) qui lui est associée soit parcourue par des impulsions de courant (+il, -i1) entre lesquelles, chaque fois à proximité d'un premier instant ($t_1$) influencé par un signal de position de rotation (34) du capteur de position de rotor (30), le sens du courant amené à la branche d'enroulement statorique (26) est changé par une opération de commutation en un sens opposé au sens du courant précédent ;
chaque fois au début d'une opération de commutation, à partir d'un deuxième instant ($t_2$), la branche d'enroulement statorique (26) disposée dans la diagonale du pont en H (22) est mise en court-circuit par commande correspondante du pont en H (22) afin de produire un courant circulaire ($i^*$) décroissant à travers la branche d'enroulement statorique (26), lequel courant circulaire ($i^*$) atteint la valeur nulle à un troisième instant ($t_3$) ;
la distance temporelle ($T_{CC}$) entre le premier instant ($t_1$) et le troisième instant ($t_3$) est modifiée par des étapes de modification dans le sens d'un minimum au moins dans la majorité de ces étapes.

**2.** Moteur selon la revendication 1, dans lequel le dispositif de commande (36) est conçu pour commander le sens d'une étape de modification en fonction du résultat d'au moins une étape de modification précédente.

**3.** Moteur selon la revendication 1 ou 2, dans lequel le dispositif de commande (36) est conçu de façon que le troisième instant ($t_3$) se situe dans le temps après le premier instant ($t_1$) au moins dans la majorité des cas.

**4.** Moteur selon l'une des revendications précédentes, dans lequel au moins une diode de roue libre (58, 60) est prévue dans le pont en H (22), par laquelle le courant circulaire ($i^*$) circule en fonctionnement.

**5.** Moteur selon l'une des revendications précédentes, dans lequel, en fonctionnement, un courant alternatif circule entre la branche d'enroulement statorique (26) et le condensateur de circuit intermédiaire (48), et
la grandeur de ce courant alternatif est modifiée dans le sens d'un minimum en fonction de l'amplitude d'un courant ($i_R$) circulant à travers la résistance de mesure (59) lors de l'opération de commutation.

**6.** Moteur selon l'une des revendications précédentes, dans lequel un convertisseur A/N (66) pour numériser un signal dépendant du courant ($u_{67}$), qui est dérivé de la chute de tension ($u_R$) sur la résistance de mesure (59), est associé au dispositif de commande (36).

7. Moteur selon la revendication 6, dans lequel un dispositif (63, 67, 68) de décalage de potentiel pour le signal d'entrée du convertisseur A/N (66) est associé à l'entrée du convertisseur A/N (66), au moyen duquel toutes les valeurs de ce signal d'entrée se produisant en fonctionnement peuvent être décalées dans des plages d'une polarité dans lesquelles le convertisseur A/N (66) peut réaliser une numérisation du signal ($u_{67}$) qui lui est amené.

8. Moteur selon la revendication 7, dans lequel est il est prévu, pour le décalage de potentiel, un réseau de résistances (63, 67, 68) qui est connecté à un potentiel de tension continue ($+V_{CC}$) dans le sens duquel le décalage de potentiel est souhaité.

9. Moteur selon la revendication 7 ou 8, dans lequel le dispositif (63, 67, 68) de décalage de potentiel provoque en fonctionnement une valeur de tension caractéristique ($U_{zero}$) à l'entrée (66a) du convertisseur A/N (66), laquelle valeur caractéristique est une valeur de tension et est mesurable quand un courant circulaire (i*) circule dans le moteur (20).

10. Moteur selon l'une des revendications 6 à 9, dans lequel le signal dépendant du courant ($u_{67}$) prend, pendant la circulation du courant circulaire (i*), une valeur caractéristique ($U_{zero}$) qui indique l'absence d'un courant à travers la résistance de mesure (59),
et une différence du signal dépendant du courant ($u_{67}$) par rapport à cette valeur caractéristique ($U_{zero}$) indique la fin d'un courant circulaire (i*) ayant circulé précédemment.

11. Moteur selon la revendication 10, dans lequel le dispositif de commande est conçu pour contrôler, en présence d'une valeur de signal ($u_{67}$) différente de la valeur caractéristique ($U_{zero}$), si la différence ($U_{dif}$) entre la valeur caractéristique ($U_{zero}$) et la valeur actuelle ($u_{67}$) a augmenté ou diminué par rapport à la mesure précédente par l'étape de modification alors exécutée,
et, en présence d'une différence ($U_{dif}$) plus grande, exécuter une étape de modification opposée à l'étape de modification alors exécutée afin de réduire la différence ($U_{dif}$).

12. Moteur selon la revendication 10 ou 11, dans lequel le dispositif de commande (36) est conçu pour contrôler, en présence d'une valeur actuelle ($u_{67}$) différente de la valeur caractéristique ($U_{zero}$), si la différence ($U_{dif}$) entre la valeur caractéristique ($U_{zero}$) et la valeur actuelle ($u_{67}$) a augmenté ou diminué par rapport à la mesure précédente par l'étape de modification précédente,
et, en présence d'une différence ($U_{dif}$) plus petite, exécuter une nouvelle étape de modification, analogue à l'étape de modification alors exécutée.

13. Moteur selon l'une des revendications 6 à 12, dans lequel un filtre passe-bas (63, 64) est prévu entre la résistance de mesure (59) et le convertisseur A/N (66).

14. Moteur selon l'une des revendications précédentes, dans lequel le dispositif de commande (36) est conçu de façon à pouvoir être activé par une opération de commutation.

Fig. 1

Fig. 2

Fig 3

Fig. 4

Fig. 5

Fig. 6

Fig. 7

200

Fig. 8

Fig. 9

**IN DER BESCHREIBUNG AUFGEFÜHRTE DOKUMENTE**

**In der Beschreibung aufgeführte Patentdokumente**

- EP 1786093 A1